# EUROPEAN PATENT SPECIFICATION

(11) **EP 1 367 239 B1**
(45) Date of publication and mention of the grant of the patent: **05.10.2005**
(21) Application number: 03253451.3
(22) Date of filing: 02.06.2003
(51) Int. Cl.: F02B 75/24, F02B 63/04, F16J 1/22

(54) **Piston and reciprocatory engine**
Kolben und Hubkolbenmaschine
Piston et moteur alternatif

(30) Priority: 01.06.2002 GB 0212774
(43) Date of publication of application: 03.12.2003
(73) Proprietor: Raymond Chase Engineers Ltd, Staffordshire ST5 0BX (GB)
(72) Inventor: Stokes, John Anthony, Raymond Chase Engineers Ltd, Newcastle, Staffordshire ST50BX (GB)
(74) Representative: Lockey, Robert Alexander

(56) References cited:
- GB-A- 442 006
- GB-A- 2 328 476
- US-A- 4 651 629
- US-A- 5 685 267
- PATENT ABSTRACTS OF JAPAN vol. 009, no. 162 (M-394), 6 July 1985 (1985-07-06) & JP 60 036730 A (KOUSAKU YAMAMOTO), 25 February 1985 (1985-02-25)

## Description

### Description of Invention

This invention relates to a piston and a reciprocatory engine having a piston, and particularly but not exclusively for an arrangement in which a reciprocatory engine is operable in combination with an electric generator, such an arrangement being referred to herein as a hybrid engine.

It is known to produce a relatively efficient engine by combining a reciprocatory engine, in particular an internal combustion engine, with a generator for use in a vehicle driven by electric motors. Since the motive power of the vehicle is provided only by the electric motors, the internal combustion engine can be run at a constant speed which is optimised for its most efficient performance. The internal combustion engine drives the generator which supplies power either to an electric motor to drive the vehicle or to batteries which can then be called on to supply the electric motor. Such a hybrid engine will require a smaller internal combustion engine than a comparably sized vehicle driven only by an internal combustion engine, but internal combustion engines with smaller combustion chambers are less efficient, and for internal combustion engines with smaller numbers of cylinders, vibration and noise problems are apparent.

From British patent no. GB 2328476 B, it is known to provide a reciprocatory engine having two opposed cylinders with balanced connection rods to reduce the above mentioned vibrations and noise problems.

A problem with the above mentioned engine, and indeed in piston-driven internal combustion engines in general, is that connection rods are joined to pistons by a so called gudgeon pin. These gudgeon pins are know to flex under the load of the connection rod and piston when the engine is operating. Further, because supports for the gudgeon pin are provided in the piston, the expansion of the piston due to heating is not even. To overcome this differential expansion, it is known to machine pistons such that they are slightly oval, and expand to become fully circular as a result of the differential expansion when the engine reaches its operating temperature. This leads to further noise and vibration problems, particularly when the engine starts. It is known from US 5685267 to provide a ball joint to connect a connecting rod and a piston with a holder ring held in place by a collar connected to the piston skirt.

An aim of the present invention is to reduce or overcome one or more of the above problems.

According to a first aspect of the invention, we provide a piston for a reciprocatory engine, the piston comprising a body part, a skirt extending from the body part and a socket to receive a connecting part of a connecting rod, wherein the connecting part has a part-spherical surface and wherein the socket is adapted to engage the part-spherical surface, characterised in that the piston further comprises a upstanding part extending from the body part, the socket comprising an insert received in a recess defined by the upstanding part, the upstanding part being spaced from the skirt.

The insert may comprise bronze.

The insert may comprise a plurality of sections which may be separated to receive the connecting part and which are held adjacent to one another when received in the recess.

The socket and the piston may be coaxial.

According to a second aspect of the invention, we provide a reciprocatory engine comprising a cylinder a piston reciprocal in said cylinder and a crank shaft, wherein the piston comprises a piston according to the first aspect of the invention and wherein the crank shaft is connected to the piston by a connecting rod, the connecting rod comprises a connecting part having a part spherical surface, the connecting part being received in the socket of the piston.

The connecting rod may comprise a bifurcated connecting rod having a first limb and a second limb, the first limb and the second limb being connected to the crank shaft by a first big end bearing and a second big end bearing respectively.

The limbs may be generally parallel and disposed equidistant from a longitudinal axis of the connecting rod.

The engine may comprise a further cylinder, the cylinder and the further cylinder being coaxial, the engine further comprising a further piston, the further piston comprising a piston according to the first aspect of the invention, the further piston being connected to the crank shaft by a further connecting rod, the further connecting rod comprising a part spherical connecting part received in a socket of the further piston and being connected to the crank shaft by a third big end bearing disposed between the first big end bearing and the second big end bearing.

The connecting rods may be of equal weights and the centre of gravity of each connecting rod is disposed the same distance from the end of each connecting rod along a longitudinal axis of each connecting rod.

The connecting rod may comprise a first material and the further connecting rod may comprise a second material, the first material having a lower density than the second material.

The third big end bearing may be offset in a direction laterally of the crank shaft from the first big end bearing and the second big end bearing.

The piston and further piston may be substantially identical.

According to a third aspect of the invention, we provide a hybrid engine comprising a reciprocatory engine and a generator having a generator shaft wherein the crank shaft is drivably connected to the generator shaft.

The generator shaft may be integrally provided with the crank shaft.

The invention will now be described by way of example only with reference to the accompanying drawings wherein;
Figure 1 is a section though a hybrid engine embodying the present invention,
Figure 2 is a perspective view on a larger scale of a part of the engine of Figure 1,
Figure 3 is an end view of a piston embodying the present invention,
Figure 4 is diagrammatic illustration of a vehicle provided with a hybrid engine of Figure 1, and
Figure 5 is a section through a further hybrid engine.

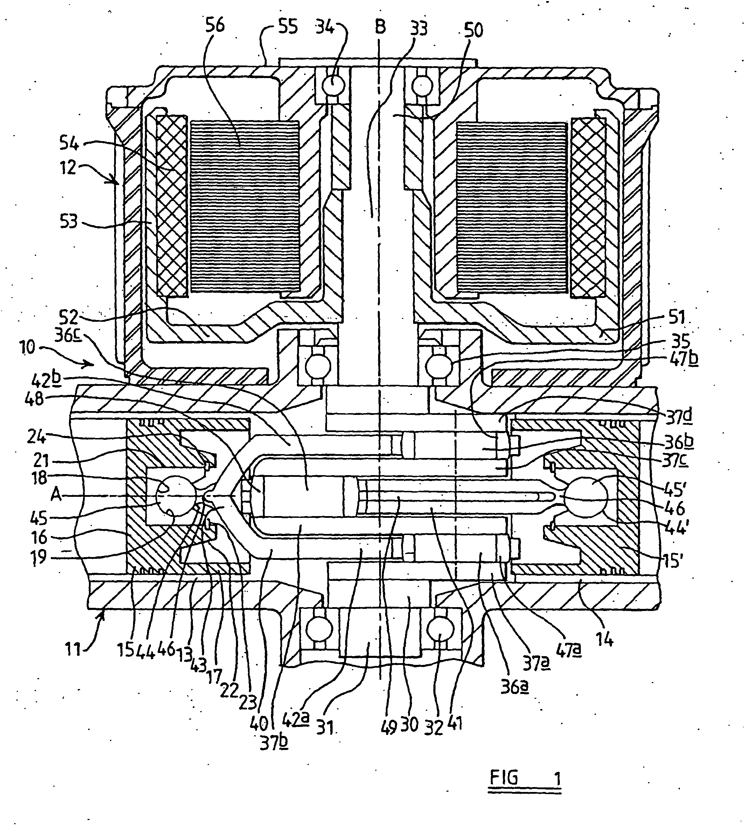

Referring now to Figure 1, a hybrid engine is shown at 10 comprising an internal combustion engine 11 and a generator 12. The internal combustion engine 11 comprises a pair of opposed, co-axial cylinders 13, 14 in which a piston 15, 15' respective is reciprocally movable. In this example, the pistons 15, 15' are substantially identical.

As shown in Figures 1 to 3, the piston 15 comprises a cylindrical body part 16 and a piston skirt 17. The body part 16 and piston skirt 17 have a longitudinal axis A. The piston 15 is further provided with a socket 18 having a part cylindrical surface 19 to engage a part spherical connecting part of a connecting rod as will be discussed in more detail hereafter. The socket 18 is provided by an insert 20 which is received in a recess 21. In this example, the recess 21 is generally cylindrical, defined by an upstanding part 22 extending from the body part 16, the recess 21 also extending into the body part 16. At its upper end, the upstanding part 22 is provided with an annular recess 23 to receive a circlip 24.

In the present example, to enable the insert 20 to receive a connection part, the insert 20 comprises two parts, in this example halves 20a, 20b, which in the present example are advantageously identical. Each half 20a, 20b comprises a part cylindrical exterior surface 25a, 25b. The halves 20a, 20b are further provided with a concave part hemispherical interior surface 26a, 26b, and, at an upper part a frusto-conical upper surface 27a 27b which intersects the part hemispherical surface 26a, 26b to define a semicircular recess 28a, 28b. Thus, when the halves 20a, 20b are placed in abutment, they define a generally cylindrical insert 20 having a part spherical socket 18 with a generally circular mouth 28. It will be apparent that the insert 20 may be assembled from any other number of parts as appropriate.

Referring now to Figure 1, the internal combustion engine is provided with a crank shaft 30. At one end 31, the crank shaft is journalled in bearings 32 and a further end part 33 extending through the generator 12 is journalled in bearings 34. In the present example, the crank shaft 30 is also journalled in intermediate bearings 35. The crank shaft 30 is rotatable about an axis B. The crank shaft 30 comprises three offset sections 36a, 36b, 36c. Sections 36a, 36b are generally co-axial and are laterally offset from axis B in one direction, while section 36c is disposed between sections 36a and 36b in a longitudinal direction and is offset laterally from axis B by the same distance as sections 36a, 36b but in the opposite direction from axis B thereof. Crank shaft webs 37a, 37b, 37c and 37d connect the crank shaft end part 31, section 36a, section 36c, section 36b and crank shaft end part 33.

The pistons 15, 15' are connected to the crank shaft 30 by connecting rods 40, 41 respectively. The first connecting rod 40 is bifurcated and comprises any two limbs 42a, 42b which in the present example and spaced apart, generally parallel and are disposed equidistant from a longitudinal axis of the connecting rod 40. The limbs 42a, 42b, are connected at a base part 43. Also connected to the base part 43 is a connecting part 44 comprising a head 45 having a part spherical surface received within the socket 18 joined to the base part 43 by a neck 46 which extends through the mouth 28. At the end of each limb 42a, 42b is an eye 47a, 47b in which sections 36a, 36b respectively of the crank shaft 19, 33 are journalled providing a first big end bearing and a second big end bearing respectively. The connecting rods 40, 41 may be provided with lubrication channels as desired.

The connecting rod 41 comprises an bifurcated rod provided with a connecting part 44', in like manner to the connecting part 44, comprising a head part 45' having a part spherical surface and a neck part 46'. The second connecting rod 41 is provided at its end with an eye 48 in which the section 36c of the crank shaft 30 is journalled providing a third big end bearing.

The first connecting rod 40 and second connecting rod 41 have the same mass, and their respective centres of gravity are disposed at an equal distance along their respective longitudinal axis. For this to be achieved, the connecting rod 40 must be made of a material which has a lower density than the material used in the connecting rod 41. For example, the connecting rod 40 may comprise aluminium and the second connecting rod 41 may comprise mild steel or cast iron. To ensure that the rods 40, 41 have the same mass, one or both rods may be appropriately machined or otherwise assembled or manufactured. In the present example, the second connecting rod 41 is provided with a recess 49 to adjust the mass of the connecting rod 41. In the present example, the crank shaft section 36c has a greater width than the direction parallel to the axis B than the sections 36a, 36b, since all the force from the piston 15' is transmitted through this section 36c, and also to permit the connecting rod 41 to have a greater width to allow more flexibility in balancing the mass of the connecting rods 40, 41. The section 36c is also of a greater width than sections 36a, 36b to enable the section of 36c to counterbalance the sections 36a, 36b. Because the pistons, 15, 15' are identical, the pistons themselves are balanced and the necessary steps to counterbalance the engine can be performed by varying the masses of the connecting rods 40, 41.

The pistons 15, 15' and connecting rods 40, 41 are simply assembled by placing the two halves 20a, 20b, of the insert around the connecting part 44, 44' and locating the insert 20 in the recess 21. A circlip 24 is then located in the circular recess 23.

The piston 15 and the internal combustion engine 11 are thus advantageous in many ways. For example, by replacing known gudgeon pins with ball and socket joints, the pistons 15 may be made generally completely symmetrical about axis A, thus ensuring that there is a symmetrical expansion as a result of heating. The space between the piston skirt 17 and upstanding part 22 permits differential expansion to occur between the different parts of the piston 15. The piston 15 may thus may be manufactured to be symmetrical, without needing to be manufactured to be oval below its working temperature to take account of differential expansion caused by necessary supports to receive a gudgeon pin. Because in conventional combustion engines a gudgeon pin is attached to a piston at its ends and engages a connecting rod at its middle, during operation the gudgeon pin will flex and the force generated by the piston will not necessarily be applied along the axis of the cylinder and piston, causing a nosier and unbalanced engine. In the present example, the contact between the socket surface 19 and the part spherical surface 45 will generally be tangential to the axis A at the top of the head 45, and so the force generated by the piston 15 will be applied to the connecting rod along the axis A. The mass of the piston and connecting part 45 will be less than that required to provide a piston with a gudgeon pin and big end bearing thus reducing the overall weight of the engine.

The connecting parts 44 and 44' may be provided integrally of the connecting rods 40, 41 or may be manufactured separately and joined thereto. If the connecting parts 44 and 44 are made separately of the same material and jointed to one or both of the connecting rods 40, 41, it will be apparent that the connecting parts 44, 44' will have themselves the same mass thus assisting in balancing the engine. By providing the piston rod 40 as a pair of limbs 42a, 42b joined by a base part 43, flexing of the connecting rod 40 under load is reduced.

An advantage of providing the connecting rods 40, 41 and connecting parts 44, 44'integrally is that where the connecting rods 40, 41 and connecting parts 44, 44' are providing separately and joined together, the joint, whether a weld or mechanical fixing such as a bolt or otherwise will be particularly subject to metal fatigue and provide an additional failure mode. Further, where the connecting rods 40, 41 and connecting parts 44, 44' are made of different materials, they may be subject to differential expansion when heated, with associated wear and fatigue problems.

The insert 20 may be made of any suitable wear-resistant material as desired. The insert 20 for example may be made of phosphor bronze or a suitable non-metallic material such as a nylon. The insert 20 is further advantageous in that the insert 20 may be replaced if worn, whereas if the connecting parts 44, 44' were received in a socket in the piston, it would be necessary to replace the piston as a whole if the socket were excessively worn.

The piston and connecting nod assembly described above is simple and cost effective, having possibly only five components (the piston 17, insert halves 20a, 20b, and connecting rod 40, 41 with integral connecting part 44, 44' and circlip 24). The components are simple to assemble and have reduced machinery and material requirements over known assemblies.

The internal combustion engine 11 may comprise a two stroke or a four stroke engine, preferably a four stroke engine and may comprise any number of cylinders as desired, preferably two, providing that the engine remains balanced over the whole of the firing cycle. For example, such a balance may be achieved for a four cylinder engine provided with two connecting rods each having two limbs, similar to the first connecting rods 40 described hereinbefore.

The generator 12 comprises a generator shaft 50 comprising part of the crank shaft 30. A cradle 51 is connected to the generator shaft 50 and comprises a first part 52 extending transversely to the generator shaft and a second part 53 connected to the transverse part 52 and disposed generally parallel to the generator shaft 50. Mounted on the second part 53 is a ferrite magnet 54. Mounted on a case 55 of the generator 12 is a set of windings 56 disposed between the ferrite magnet 54 and the generator shaft 50. A rectifier may be provided as necessary in the output of the generator.

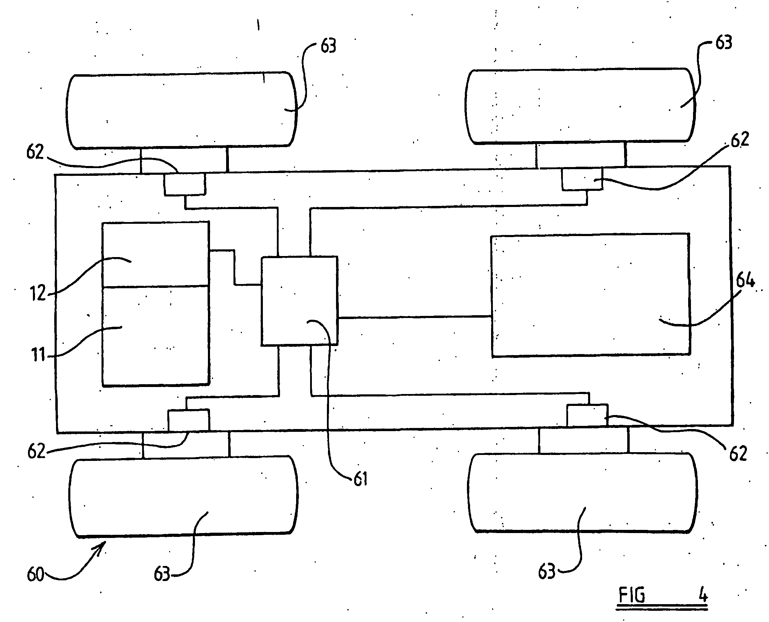

A vehicle 60 comprising a hybrid motor 10 is shown in Figure 4. The current from the generator is directed by a controller 61 to one or more electric motors 62. Here one motor 62 at each wheel 63 is shown, although a single motor driving two or more wheels, or two motors each driving one or more wheels, or any other combination could be envisaged. The controller can also direct current to batteries 64.

In operation, the internal combustion engine 11 is run constantly at a high speed, optimised to run at its maximum efficiency. The pistons 15, 15' are synchronised. Thus as shown in the Figure, both pistons 15, 15' are at the "bottom" part of their stroke just prior to moving to the left and right respectively as seen in Figure 1. The pistons 15, 15' turn the crankshaft 30 driving the generator shaft 50. The current generated by the generator 12 is directed by the controller to the motors 62 driving the wheels 63. When the demand for current is in excess of that provided by the generator 12, the batteries 64 can supply the additional current. Similarly any excess generated current can be used to charge the storage batteries 64.

Although the generator shaft 50 is shown as being directly connected to the crankshaft 30 by virtue of being integral therewith, a direct or an indirect connection, for example via a gearbox or clutch means may be provided.

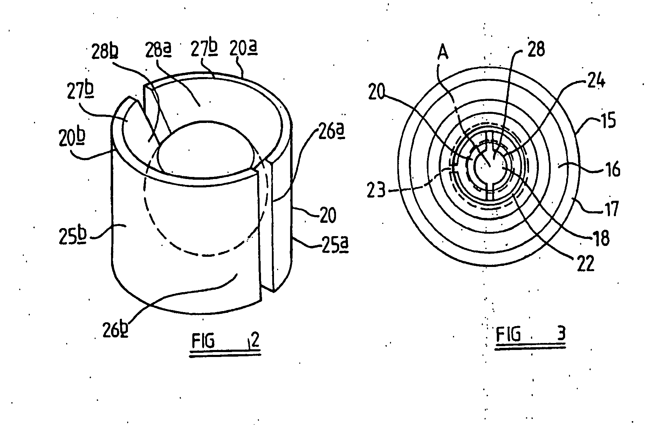

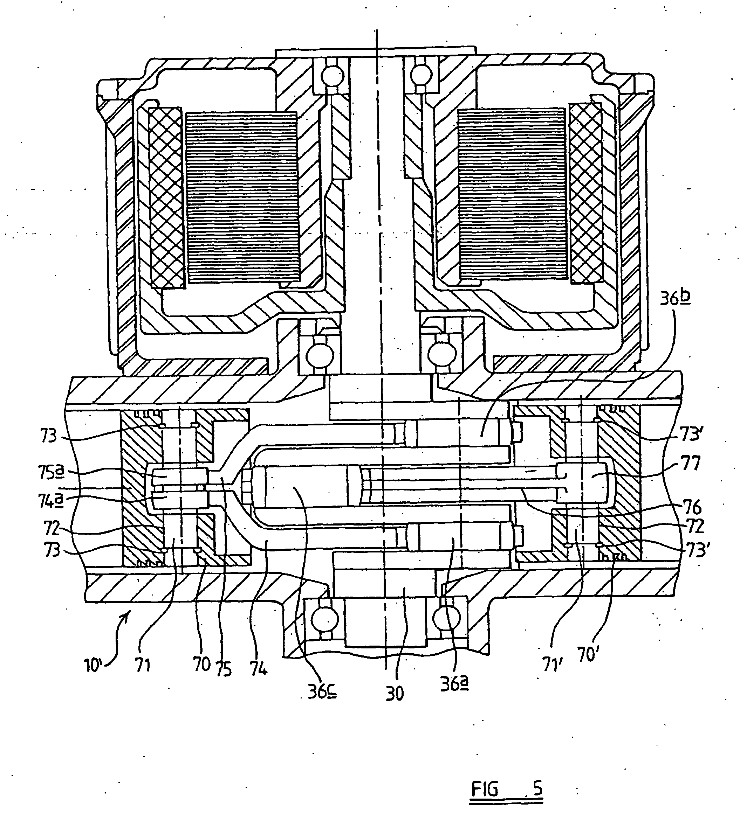

In Figure 5 another example of a hybrid engine is illustrated and the same reference numerals have been used in Figure 3 as were used with reference to Figure 1 to refer to corresponding parts. The description with reference to Figure 1 is applicable, mutatis mutandis, to the engine of Figure 3.

Referring now to Figure 5, a further hybrid engine is illustrated similar to the hybrid engine 10 of Figure 1 but wherein the pistons and connecting rods are different. In the example of Figure 5, the pistons 70, 70' are identical but in this case each comprise a gudgeon pin 71, 71' received in an appropriate cylindrical recess 72, 72' and held therein by a circlip 73 73'. The first piston 70 is connected to the crank shaft 30 by a pair of angled connecting rods 74, 75 which engage sections 36a, 36b and each engage the gudgeon pin 71 at a respective eye 74a, 75a in which the gudgeon pin 71 is journalled. The second connecting rod 76 is similar to the connecting rod 41 of Figure 1, but in this example is provided with a connecting part 77 comprising an eye in which a part of the gudgeon pin 71' is journalled. As described hereinbefore, the mass of the pistons 70, 70', gudgeon pins 71, 71' and connecting rods 74, 75 and 76 are selected in like manner to the embodiment of Figure 1 to provide a balanced engine as desired. The angled connecting rods 74, 74 may advantageously be identical and are simply orientated in opposed directions assembled on the gudgeon pins 71, whilst the separation of the eyes 74a, 75a permits of easier lubrication of the gudgeon pin 71.

Although the reciprocatory engines disclosed herein have been shown in combination with a generator, it will be appreciated that such an engine can be used in combination with any other suitable apparatus or for any other purpose as desired, in particular in applications where a reduced level of engine vibration is required.

Although the pistons and connecting rods disclosed herein have been shown in an opposed-cylinder reciprocatory engine, it will be apparent that such pistons and connecting rods nay be used in any suitable reciprocatory engine as desired.

In the present specification "comprises" means "includes or consists of' and "comprising" means "including or consisting of.

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof.

## Claims

1. A piston (15) for a reciprocatory engine, the piston (15) comprising a body part (16), a skirt (17) extending from the body part (16) and a socket (18) to receive a connecting part (44, 44') of a connecting rod (40, 41) wherein the connecting part (44, 44') has a part-spherical surface and wherein the socket (18) is adapted to engage the part-spherical surface, **characterised in that** the piston (15) further comprises a upstanding part (22) extending from the body part (16), the socket (18) comprising an insert (20) received in a recess (21) defined by the upstanding part (22), the upstanding part (22) being spaced from the skirt (47).

2. A piston (15) according to claim 1 wherein the insert (20) comprises bronze.

3. A piston (15) according to claim 1 or claim 2 wherein the insert (20) comprises a plurality of insert parts (20a 20b) which may be separated to receive the connecting part (44, 44') and which are held adjacent to one another when received in the recess (21).

4. A piston according to claim 3 wherein each insert part (20a, 20b) has a concave inner surface (26a, 26b)and a recess (28a, 28b) such that when the insert parts (20a, 20b) are held adjacent one another they define the socket and a generally circular mouth (28).

5. A piston (15) according to claim 4 comprising a pair of identical insert parts (20a, 20b).

6. A piston (15) according to any one of the preceding claims wherein the socket (18) and the piston (15) are coaxial.

7. A piston assembly comprising a piston (15) according to any one of the preceding claims and a connecting rod (40, 41), wherein the connecting part (44, 44') of the connecting rod (40, 41) is received in the socket (18) and wherein the connecting part (44, 44') and connecting rod (40, 41) are provided integrally.

8. A reciprocatory engine (11) comprising a cylinder (13), a piston (15) reciprocal in said cylinder (13) and a crank shaft (30), wherein the piston (15) comprises a piston according to any one of claims 1 to 6 and wherein the crank shaft (30) is connected to the piston (15) by a connecting rod (40), the connecting rod (40) comprising a connecting part (44) having a part spherical surface, the connecting part (44) being received in the socket (18) of the piston (15).

9. A reciprocatory engine (11) according to claim 8 wherein the connecting rod (40) comprises a bifurcated connecting rod having a first limb (42a) and a second limb (42b), the first limb (42a) and the second limb (42b) being connected to the crank shaft (30) by a first big end bearing and a second big end bearing respectively.

10. A reciprocatory engine (11) according to claim 9 wherein the limbs (42a, 42b) are generally parallel and disposed equidistant from a longitudinal axis of the connecting rod (40).

11. A reciprocatory engine (11) according to claim 9 or claim 10 comprising a further cylinder (14), the cylinder (13) and the further cylinder (14) being coaxial, the engine further comprising a further piston (15'), the further piston (15') comprising a piston according to any one of claims 1 to 6, the further piston (15') being connected to the crank shaft (30) by a further connecting rod (41), the further connecting rod (41) comprising a part spherical connecting part (44') received in a socket (18) of the further piston (15') and being connected to the crank shaft (30) by a third big end bearing disposed between the first big end bearing and the second big end bearing.

12. A reciprocatory engine (11) according to claim 11 wherein the connecting rods (40, 41) are of equal weights and the centre of gravity of each connecting rod (40, 41) is disposed the same distance from the end of each connecting rod (40, 41) along a longitudinal axis of each connecting rod (40, 41).

13. A reciprocatory engine (11) according to claim 12 wherein the connecting rod (40) comprises a first material and the further connecting rod (41) comprises a second material, the first material having a lower density than the second material.

14. A reciprocatory engine (11) according to any one of claims 11 to 13 wherein the third big end bearing is offset in a direction laterally of the crank shaft (30) from the first big end bearing and the second big end bearing.

15. A reciprocatory engine according to any one of claims 11 to 14 wherein the piston (15) and further piston (51') are substantially identical.

16. A hybrid engine (10) comprising a reciprocatory engine (11) according to any one of claims 8 to 15 and a generator (12) having a generator shaft (50) wherein the crank shaft (30) is drivably connected to the generator shaft (50).

## Patentansprüche

1. Kolben (15) für eine Hubkolbenmaschine, wobei der Kolben (15) ein Körperteil (16), einen sich von dem Körperteil (16) erstreckenden Rand (17) und eine Hülse (18) zum Aufnehmen eines Verbindungsteils (44, 44') einer Verbindungsstange (40, 41) umfaßt, wobei das Verbindungsteil (44, 44') eine teilkugelförmige Oberfläche aufweist, und wobei die Hülse (18) angepaßt ist, um in die teilkugelförmige Oberfläche zu greifen, **dadurch gekennzeichnet, daß** der Kolben (15) ferner ein aufrechtes Teil (22) umfaßt, das sich vom Körperteil (16) erstreckt, wobei die Hülse (18) einen in einer Ausnehmung (21) aufgenommenen Einsatz (20) umfaßt, definiert durch das aufrechte Teil (22), wobei das aufrechte Teil (22) von dem Rand (17) beabstandet ist.

2. Kolben (15) nach Anspruch 1, wobei der Einsatz (20) Bronze umfaßt.

3. Kolben (15) nach Anspruch 1 oder Anspruch 2, wobei der Einsatz (20) eine Vielzahl von Einsetzteilen (20a, 20b) umfaßt, die getrennt sein können, um das Verbindungsteil (44, 44') aufzunehmen, und welche benachbart zueinander gehalten werden, wenn sie in der Ausnehmung (21) aufgenommen sind.

4. Kolben nach Anspruch 3, wobei jedes Einsetzteil (20a, 20b) eine konkave innere Oberfläche (26a, 26b) und eine Ausnehmung (28a, 28b) aufweist, so daß sie die Hülse und eine im allgemeinen kreisförmige Öffnung (28) definieren, wenn die Einsetzteile (20a, 20b) benachbart zueinander gehalten werden.

5. Kolben (15) nach Anspruch 4, umfassend ein Paar von identischen Einsetzteilen (20a, 20b).

6. Kolben (15) nach einem der vorangehenden Ansprüche, wobei die Hülse (18) und der Kolben (15) koaxial sind.

7. Kolbenzusammenbau, der einen Kolben (15) nach einem der vorangehenden Ansprüche und eine Verbindungsstange (40, 41) umfaßt, wobei das Verbindungsteil (44, 44') der Verbindungsstange (40, 41) in der Hülse (18) aufgenommen ist, und wobei das Verbindungsteil (44, 44') und die Verbindungsstange (40, 41) integral bereitgestellt sind.

8. Hubkolbenmaschine (11), umfassend einen Zylinder (13), einen Kolben (15), der in dem Zylinder (13) hin- und herbeweglich ist, und eine Kurbelwelle (30), wobei der Kolben (15) einen Kolben gemäß einem der Ansprüche 1 bis 6 umfaßt, und wobei die Kurbelwelle (30) mit dem Kolben (15) durch eine Verbindungsstange (40) verbunden ist, wobei die Verbindungsstange (40) ein Verbindungsteil (44) mit einer teilkugelförmigen Oberfläche umfaßt, wobei das Verbindungsteil (44) in der Hülse (18) des Kolbens (15) aufgenommen ist.

9. Hubkolbenmaschine (11) nach Anspruch 8, wobei die Verbindungsstange (40) eine gabelförmige Verbindungsstange mit einem ersten Glied (42a) und einem zweiten Glied (42b) umfaßt, wobei das erste Glied (42a) und das zweite Glied (42b) mit der Kurbelwelle (30) durch ein erstes kurbelwellenseitiges Kolbenstangenlager bzw. ein zweites kurbelwellenseitiges Kolbenstangenlager verbunden sind.

10. Hubkolbenmaschine (11) nach Anspruch 9, wobei die Glieder (42a, 42b) im allgemeinen parallel sind und äquidistant um eine Längsachse der Verbindungsstange (40) angeordnet sind.

11. Hubkolbenmaschine (11) nach Anspruch 9 oder Anspruch 10 umfassend einen weiteren Zylinder (14), wobei der Zylinder (13) und der weitere Zylinder (14) koaxial sind, wobei die Maschine weiter einen weiteren Kolben (15') umfaßt, wobei der weitere Kolben (15') einen Kolben gemäß einem der Ansprüche 1 bis 6 umfaßt, wobei der weitere Kolben (15') mit der Kurbelwelle (30) durch eine weitere Verbindungsstange (41) verbunden ist, wobei die weitere Verbindungsstange (41) ein teilkugelförmiges Verbindungsteil (44') umfaßt, das in einer Hülse (18) des weiteren Kolbens (15') aufgenommen ist und mit der Kurbelwelle (30) durch ein drittes kurbelwellenseitiges Kolbenstangenlager verbunden ist, das zwischen dem ersten kurbelwellenseitigen Kolbenstangenlager und dem zweiten kurbelwellenseitigen Kolbenstangenlager angeordnet ist.

12. Hubkolbenmaschine (11) nach Anspruch 11, wobei die Verbindungsstangen (40, 41) von gleichem Gewicht sind und der Schwerpunkt jeder Verbindungsstange (40, 41) im gleichen Abstand vom Ende jeder Verbindungsstange (40, 41) entlang einer Längsachse jeder Verbindungsstange (40, 41) angeordnet ist.

13. Hubkolbenmaschine (11) nach Anspruch 12, wobei die Verbindungsstange (40) ein erstes Material umfaßt und die weitere Verbindungsstange (41) ein zweites Material umfaßt, wobei das erste Material eine geringere Dichte als das zweite Material aufweist.

14. Hubkolbenmaschine (11) nach einem der Ansprüche 11 bis 13, wobei das dritte kurbelwellenseitige Kolbenstangenlager in einer Richtung seitlich zur Kurbelwelle (30) vom ersten kurbelwellenseitigen Kolbenstangenlager und zweiten kurbelwellenseitigen Kolbenstangenlager versetzt ist.

15. Hubkolbenmaschine nach einem der Ansprüche 11 bis 14, wobei der Kolben (15) und der weitere Kolben (15') im wesentlichen identisch sind.

16. Hybridmaschine (10) umfassend eine Hubkolbenmaschine (11) gemäß einem der Ansprüche 8 bis 15 und einen Generator (12) mit einer Generatorwelle (50), wobei die Kurbelwelle (30) antreibbar mit der Generatorwelle (50) verbunden ist.

## Revendications

1. Piston (15) pour moteur alternatif, le piston (15) comprenant une partie formant corps (16), une jupe (17) s'étendant à partir de la partie formant corps (16) et un raccord (18) pour recevoir une partie de liaison (44, 44') d'une bielle de liaison (40, 41), dans lequel la partie de liaison (44, 44') a une surface partiellement sphérique et dans lequel le raccord (18) est adapté pour se mettre en prise avec la surface partiellement sphérique, **caractérisé en ce que** le piston (15) comprend en outre une partie verticale (22) s'étendant depuis la partie formant corps (16), le raccord (18) comprenant un insert (20) reçu dans un creux (21) défini par la partie verticale (22), la partie verticale (22) étant espacée de la jupe (47).

2. Piston (15) selon la revendication 1, dans lequel l'insert (20) comprend du bronze.

3. Piston (15) selon la revendication 1 ou la revendication 2, dans lequel l'insert (20) comprend une pluralité de parties formant insert (20a, 20b) qui peuvent être séparées pour recevoir la partie de liaison (44, 44') et qui sont maintenues adjacentes l'une à l'autre lorsqu'elles sont reçues dans le creux (21).

4. Piston selon la revendication 3, dans lequel chaque partie formant insert (20a, 20b) a une surface interne concave (26a, 26b) et un creux (28a, 28b), de telle sorte que lorsque les parties formant insert (20a, 20b) sont maintenues adjacentes l'une à l'autre, elles définissent le raccord et forment une bouche généralement circulaire (28).

5. Piston (15) selon la revendication 4, comprenant une paire de parties formant insert (20a, 20b) identiques.

6. Piston (15) selon l'une quelconque des revendications précédentes, dans lequel le raccord (18) et le piston (15) sont coaxiaux.

7. Ensemble formant piston comprenant un piston (15) selon l'une quelconque des revendications précédentes et une bielle de liaison (40, 41), dans lequel la partie de liaison (44, 44') de la bielle de liaison (40, 41) est reçue dans le raccord (18) et dans lequel la partie de liaison (44, 44') et la bielle de liaison (40, 41) sont prévues d'un seul tenant.

8. Moteur alternatif (11) comprenant un cylindre (13), un piston (15) allant et venant dans ledit cylindre (13) et un vilebrequin (30), dans lequel le piston (15) comprend un piston selon l'une quelconque des revendications 1 à 6 et dans lequel le vilebrequin (30) est relié au piston (15) par une bielle de liaison (40), la bielle de liaison (40) comprenant une partie de liaison (44) ayant une surface partiellement sphérique, la partie de liaison (44) étant reçue dans le raccord (18) du piston (15).

9. Moteur alternatif (11) selon la revendication 8, dans lequel la bielle de liaison (40) comprend une bielle de liaison bifurquée ayant une première branche (42a) et une seconde branche (42b), la première branche (42a) et la seconde branche (42b) étant reliées au vilebrequin (30) par un premier coussinet de tête de bielle et un deuxième coussinet de tête de bielle, respectivement.

10. Moteur alternatif (11) selon la revendication 9, dans lequel les branches (42a, 42b) sont généralement parallèles et disposées à distance égale d'un axe longitudinal de la bielle de liaison (40).

11. Moteur alternatif (11) selon la revendication 9 ou la revendication 10, comprenant un autre cylindre (14), le cylindre (13) et l'autre cylindre (14) étant coaxiaux, le moteur comprenant en outre un autre piston (15'), l'autre piston (15') comprenant un piston selon l'une quelconque des revendications 1 à 6, l'autre piston (15') étant relié au vilebrequin (30) par une autre bielle de liaison (41), l'autre bielle de liaison (41) comprenant une partie de liaison partiellement sphérique (44') reçue dans un raccord (18) de l'autre piston (15') et étant reliée au vilebrequin (30) par un troisième coussinet de tête de bielle agencé entre le premier coussinet de tête de bielle et le deuxième coussinet de tête de bielle.

12. Moteur alternatif (11) selon la revendication 11, dans lequel les bielles de liaison (40, 41) sont de masses égales et le centre de gravité de chaque bielle de liaison (40, 41) est agencé à la même distance de l'extrémité de chaque bielle de liaison (40, 41) le long d'un axe longitudinal de chaque bielle de liaison (40, 41).

13. Moteur alternatif (11) selon la revendication 12, dans lequel la bielle de liaison (40) comprend un premier matériau et l'autre bielle de liaison (41) comprend un second matériau, le premier matériau ayant une densité plus faible que le second matériau.

14. Moteur alternatif (11) selon l'une quelconque des revendications 11 à 13, dans lequel le troisième coussinet de tête de bielle est décalé dans une direction latérale par rapport au vilebrequin (30) à partir du premier coussinet de tête de bielle et du deuxième coussinet de tête de bielle.

15. Moteur alternatif selon l'une quelconque des revendications 11 à 14, dans lequel le piston (15) et l'autre piston (51') sont sensiblement identiques.

16. Moteur hybride (10) comprenant un moteur alternatif (11) selon l'une quelconque des revendications 8 à 15 et un générateur (12) ayant un arbre de générateur (50), dans lequel le vilebrequin (30) est relié de façon entraînable à l'arbre de générateur (50).
